# EUROPEAN PATENT APPLICATION

(11) **EP 3 012 749 A1**
(43) Date of publication of application: **27.04.2016**
(21) Application number: 14891455.9
(22) Date of filing: 06.11.2014
(51) Int. Cl.: G06F 17/30

(54) **APPLICATION INFORMATION SEARCHING METHOD AND DEVICE**

(30) Priority: 06.05.2014 CN 201410189044
(71) Applicant: Baidu Online Network Technology (Beijing) Co., Ltd, Beijing 100085 (CN)
(72) Inventor: LIU, Junqi, Beijing 100085 (CN); GONG, Xiaofeng, Beijing 100085 (CN); ZHANG, Bin, Beijing 100085 (CN)
(74) Representative: Romano, Giuseppe
(86) International application number: PCT/CN2014/090426
(87) International publication number: WO 2015/169073

(57) **Abstract**

Proposed are an application information searching method and device. The method comprises: receiving a search word sent by a client; and obtaining a related application and an associated page of the search word, and returning a search result containing the related application and the associated page to the client, so that the client opens the related application and displays the associated page when determining that the related application exists at the locality. In the method for searching application information of embodiments of the present invention, by obtaining a related application and an associated page of a search word, a user can obtain a required application and related information thereabout more rapidly and conveniently, and can display the associated page when a client opens the related application, thereby saving time of the user and improving the user experience.

## Description

### CROSS-REFERENCE TO RELATED APPLICATION

This application claims priority to and benefits of Chinese Patent Application Serial No. 201410189044.3, titled "method and apparatus for searching FOR application information" filed with the State Intellectual Property Office of P. R. China on May 6, 2014 by Baidu Online Network Technology (Beijing) Co., Ltd, the entire content of which is incorporated herein by reference.

### FIELD

The present disclosure relates to a computer network technology, and more particularly to a method and an apparatus for searching for application information.

### BACKGROUND

Presently, all platforms (such as application store (APP store)) allow developers to submit an application. The application includes following associated information: name or unique identification, a screenshot or icon, an introduction, a keyword, version information, new functional information, product support information, etc. In the application store, the user may input the search term via the application search function to search for his desired application. The applications are searched for with the search term and through the associated information.

During the implementation of the present disclosure, however, the inverters find at least following problems existing in the related art. When searching for applications with relatively high real-time performance, such as a news type, a video type, a finance and economics type, a tourism type, a ticket type, since the latest information provided by the application is not recorded when the application is submitted, the user may not find his desired application, thus leading to a poor user experience.

### SUMMARY

Embodiments of the present disclosure seek to solve the problems above to at least some extent.

Accordingly, a first objective of the present disclosure is to provide a method for searching for application information, which may save a search time for a user, and promote a user experience.

A second objective of the present disclosure is to provide another method for searching for application information.

A third objective of the present disclosure is to provide an apparatus for searching for application information.

A fourth objective of the present disclosure is to provide another apparatus for searching for application information.

A fifth objective of the present disclosure is to provide a storage medium.

A sixth objective of the present disclosure is to provide another storage medium.

In order to achieve the above objectives, according to a first aspect of embodiments of the present disclosure, a method for searching for application information is provided. The method includes: receiving a search term sent from a client; obtaining an associated application and an associated page of the search term, and returning a search result containing the associated application and the associated page of the search term to the client to enable the client to open the associated application of the search term and display the associated page of the search term if the client determines that the associated application of the search term exists in local.

With the method for searching for application information according to embodiments of the present disclosure, the associated application and the associated page of the search term are obtained, such that the user may obtain the desired application and the associated information thereof quickly and conveniently, and the associated page may be displayed when the associated application is opened by the client, thus saving the search time for the user, and promoting the user experience.

According to a second aspect of embodiments of the present disclosure, another method for searching for application information is provided. The method includes: obtaining a search term inputted by a user; transmitting the search term to a server, and receiving a search result returned from the server, in which the search result contains an associated application and an associated page of the search term; and opening the associated application of the search term and displaying the associated page of the search term, if it is determined that the associated application of the search term exists in local according to the search result.

With the method for searching for application information according to embodiments of the present disclosure, by obtaining the associated application and the associated page of the search term and displaying the associated page when the associated application is opened, the user may obtain the desired application and the associated information thereof quickly and conveniently, thus saving the search time for the user, and promoting the user experience.

According to a third aspect of embodiments of the present disclosure, an apparatus for searching for application information is provided. The apparatus includes: a receiving module, configured to receive a search term sent from a client; a processing module, configured to obtain an associated application and an associated page of the search term received by the receiving module, to return a search result containing the associated application and the associated page of the search term to the client to enable the client to open the associated application of the search term and display the associated page of the search term if the client determines that the associated application of the search term exists in local.

With the apparatus for searching for application information according to embodiments of the present disclosure, the associated application and the associated page of the search term are obtained, such that the user may obtain the desired application and the associated information thereof quickly and conveniently, and the associated page may be displayed when the associated application is opened by the client, thus saving the search time for the user, and promoting the user experience.

According to a fourth aspect of embodiments of the present disclosure, another apparatus for searching for application information is provided. The apparatus includes: an obtaining module, configured to obtain a search term inputted by a user; a transmitting and receiving module, configured to transmit the search term to a server, and to receive a search result returned from the server, the search result containing an associated application and an associated page of the search term; and a displaying module, configured to open the associated application of the search term and display the associated page of the search term, if it is determined that the associated application of the search term exists in local according to the search result.

With the apparatus for searching for application information according to embodiments of the present disclosure, by obtaining the associated application and the associated page of the search term and displaying the associated page when the associated application is opened, the user may obtain the desired application and the associated information thereof quickly and conveniently, thus saving the search time for the user, and promoting the user experience.

According to a fifth aspect of embodiments of the present disclosure, a storage medium is provided, configured to storage an application program for executing the method for searching for application information according to embodiments of the first aspect of embodiments of the present disclosure.

According to a sixth aspect of embodiments of the present disclosure, a storage medium is provided, configured to storage an application program for executing the method for searching for application information according to embodiments of the second aspect of embodiments of the present disclosure.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a flow chart of a method for searching for application information according to an embodiment of the present disclosure;
Fig. 2 is a flow chart for establishing and saving an information list of containing information and an associated application thereof according to an embodiment of the present disclosure;
Fig. 3 is a flow chart of a method for searching for application information according to a specific embodiment of the present disclosure;
Fig. 4 is a flow chart of a method for searching for application information according to another embodiment of the present disclosure;
Fig. 5 is a flow chart of a method for searching for application information according to another specific embodiment of the present disclosure;
Fig. 6 is a block diagram of an apparatus for searching for application information according to an embodiment of the present disclosure;
Fig. 7 is a block diagram of an apparatus for searching for application information according to a specific embodiment of the present disclosure; and
Fig. 8 is a block diagram of an apparatus for searching for application information according to another embodiment of the present disclosure.

### DETAILED DESCRIPTION

Embodiments of the present disclosure will be described in detail in the following descriptions, examples of which are shown in the accompanying drawings, in which the same or similar elements and elements having same or similar functions are denoted by like reference numerals throughout the descriptions. The embodiments described herein with reference to the accompanying drawings are explanatory and illustrative, which are used to generally understand the present disclosure. The embodiments shall not be construed to limit the present disclosure.

A method and apparatus for searching for application information according to embodiments of the present disclosure are described below with reference to drawings.

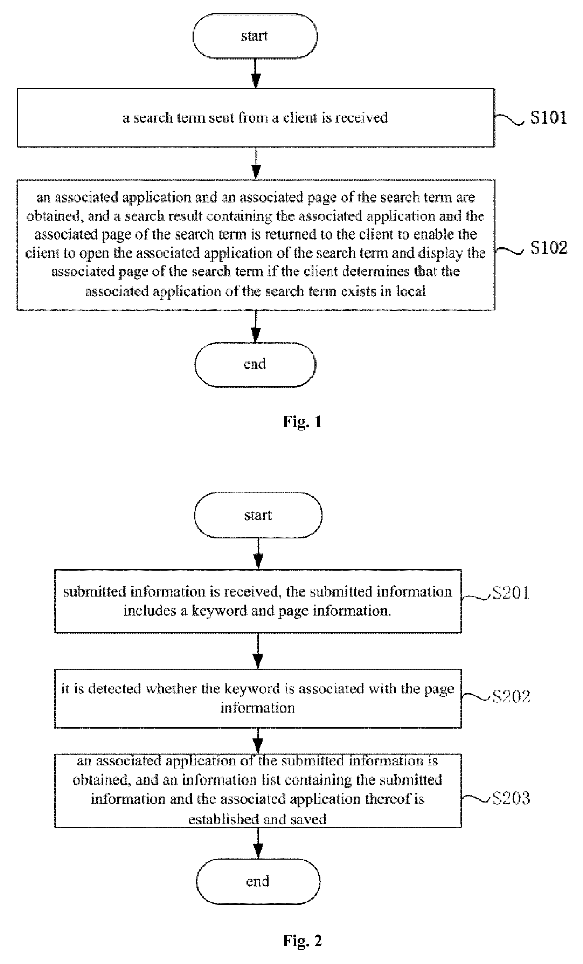

Fig. 1 is a flow chart of a method for searching for application information according to an embodiment of the present disclosure. This embodiment refers to a server-side. As shown in Fig. 1, the method for searching for application information includes following steps.

In step S101, a search term sent from a client is received.

In an embodiment of the present disclosure, the server may receive the search term sent from the client. The search term is inputted by the user in the client.

In step S102, an associated application and an associated page of the search term are obtained, and a search result containing the associated application and the associated page of the search term is returned to the client to enable the client to open the associated application of the search term and display the associated page of the search term if the client determines that the associated application of the search term exists in local.

In an embodiment of the present disclosure, after receiving the search term sent from the client, the server may conduct the search according to the search term to obtain the associated application and the associated page of the search term, and then returns the associated application and the associated page to the client so as to enable the client to open the associated application and display the associated page if the client determines that the associated application exists in local. For instance, if the search term of the user is "Samsung S5", the server may search according to "Samsung S5", and may obtain the associated applications (APP) containing "Samsung S5" and the associated pages of "Samsung S5". The associated applications (APP) containing "Samsung S5" include a news type APP (such as Sina news, Netease news, etc.), and may also include an online shopping type APP (such as Jingdong Mall, Amazon, etc.). If the Sina news APP exists in the client, it may be opened and the news page associated with "Samsung S5" may be displayed. If the Jingdong Mall APP exists in the client, it may be opened and the information page associated with "Samsung S5" may be displayed.

In an embodiment of the present disclosure, in order to obtain the associated application and the associated page of the search term, an information list containing information and an associated application thereof may be established and saved before the server obtains the associated application and the associated page of the search term, as shown in Fig. 2, which specifically includes following steps.

In step S201, submitted information is received. The submitted information includes a keyword and page information.

Specifically, the server may obtain frequency information, and receives the information submitted by a developer via an interface provided by a third party according to the frequency information. The frequency information refers to a frequency of submitting the information by the developer in a certain period. The information submitted by the developer may include a keyword and page information, etc.

In step S202, it is detected whether the keyword is associated with the page information.

After receiving the submitted information, the server may detect whether the keyword is associated with the page information.

In step S203, an associated application of the submitted information is obtained, and an information list containing the submitted information and the associated application thereof is established and saved.

Specifically, if the keyword is associated with the page information, then the server obtains degrees of association of the keyword relative to applications based on a predetermined strategy, and obtains the associated application of the submitted information according to the degrees of association. The predetermined strategy includes but is not limited to one or more of a search hotspot investigation strategy, a keyword proportion precaution strategy and a credibility strategy. After obtaining the associated applications of the submitted information, the server may establish and save the information list containing the submitted information and the associated application thereof.

In an embodiment of the present disclosure, after detecting whether the keyword is associated with the page information, the server may also update credibility information according to a detection result. The credibility information may be used as a basis of ranking applications. A high credibility suggests a higher-ranking application, and a low credibility suggests a lower-ranking application. If all of the keywords and page information submitted by a developer are respectively associated, then the developer has a high credibility. If the keywords and page information submitted by a developer are not associated, then the developer has a low credibility. The information submitted by the developer with a high credibility may be detected by sampling, while the information submitted by the developer with a low credibility may be detected entirely, that is, a detecting strength for the information submitted by the developer with a low credibility is larger than that for the information submitted by the developer with a high credibility.

With the method for searching for application information according to embodiments of the present disclosure, the associated application and the associated page of the search term are obtained, such that the user may obtain the desired application and the associated information thereof quickly and conveniently, and the associated page may be displayed when the associated application is opened by the client, thus saving the search time for the user, and promoting the user experience.

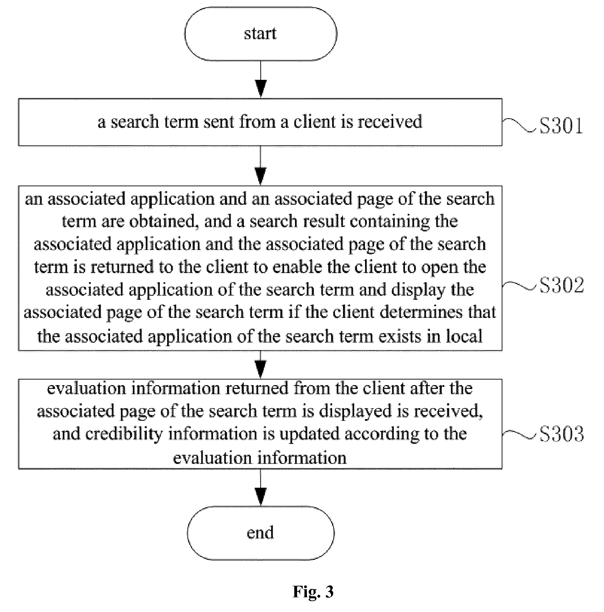

Fig. 3 is a flow chart of a method for searching for application information according to a specific embodiment of the present disclosure. This embodiment refers to a server-side. As shown in Fig. 3, the method for searching for application information includes following steps.

In step S301, a search term sent from a client is received.

In an embodiment of the present disclosure, the server may receive the search term sent from the client. The search term is inputted by the user in the client.

In step S302, an associated application and an associated page of the search term are obtained, and a search result containing the associated application and the associated page of the search term is returned to the client to enable the client to open the associated application of the search term and display the associated page of the search term if the client determines that the associated application of the search term exists in local.

In an embodiment of the present disclosure, after receiving the search term sent from the client, the server may conduct the search according to the search term to obtain the associated application and the associated page of the search term, and then returns the associated application and the associated page to the client so as to enable the client to open the associated application and display the associated page if it is determined that the associated application exists in local. For instance, if the search term of the user is "Samsung S5", the server may search according to "Samsung S5", and may obtain the associated applications (APP) containing "Samsung S5" and the associated pages of "Samsung S5". The associated applications (APP) containing "Samsung S5" include a news type APP (such as Sina news, Netease news, etc.), and may also include an online shopping type APP (such as Jingdong Mall, Amazon, etc.). If the Sina news APP exists in the client, it may be opened and the news page associated with "Samsung S5" may be displayed. If the Jingdong Mall APP exists in the client, it may be opened and the information page associated with "Samsung S5" may be displayed.

In step S303, evaluation information returned from the client after the associated page of the search term is displayed is received, and credibility information is updated according to the evaluation information.

In an embodiment of the present disclosure, the server may receive the evaluation information returned from the client after the associated page is displayed, and may update the credibility information according to the evaluation information. If the user's evaluation for the associated page displayed is satisfaction, the credibility of the application is increased; if the user's evaluation for the associated page displayed is dissatisfaction, the credibility of the application is reduced.

With the method according to the embodiments of the present disclosure, by updating the credibility information according to the evaluation information returned from the client, the applications may be ranked intelligently, so as to enable the user to obtain the application with a higher credibility more conveniently, thus saving the search time for the user, and promoting the user experience.

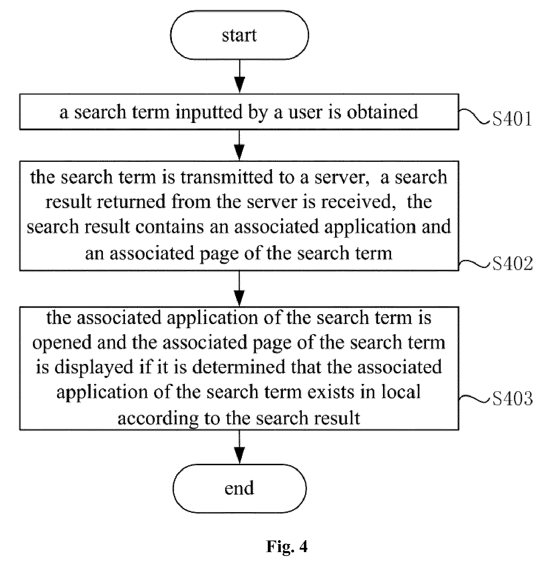

Fig. 4 is a flow chart of a method for searching for application information according to another embodiment of the present disclosure. This embodiment refers to a client-side. As shown in Fig. 4, the method for searching for application information includes following steps.

In step S401, a search term inputted by a user is obtained.

In an embodiment of the present disclosure, a client may obtain the search term inputted by the user. The search term may be a keyword of a resource desired by the user, for instance, the user may input "Samsung S5" for searching, if the user intends to obtain associated information (such as a time to market and a price, etc.) of Samsung S5.

In step S402, the search term is transmitted to a server, and a search result returned from the server is received. The search result contains an associated application and an associated page of the search term.

In an embodiment of the present disclosure, after obtaining the search term inputted by the user, the client may transmit the search term to the server to enable the server to perform a search according to the key word. After the server obtains the search result, the client may receive the search result returned from the server. The search result may contain an associated application and an associated page of the search term.

In step S403, the associated application is opened and the associated page is displayed, if it is determined that the associated application exists in local according to the search result.

In an embodiment of the present disclosure, the client may determine whether the associated application exists in local according to the search result. If there is the associated application, the associated application is opened and the associated page is displayed. For instance, if the search term of the user is "Samsung S5", the search result may include a Jingdong Mall APP, etc. If the Jingdong Mall APP exists in the client, it may be opened and the information page associated with "Samsung S5" may be displayed.

If there is no associated application in local, the client may download the associated application to local and then installs it. After installing the associated application, the client may open the associated application and display the associated page.

With the method for searching for application information according to embodiments of the present disclosure, by obtaining the associated application and the associated page of the search term and displaying the associated page when the associated application is opened, the user may obtain the desired application and the associated information thereof quickly and conveniently, thus saving the search time for the user, and promoting the user experience.

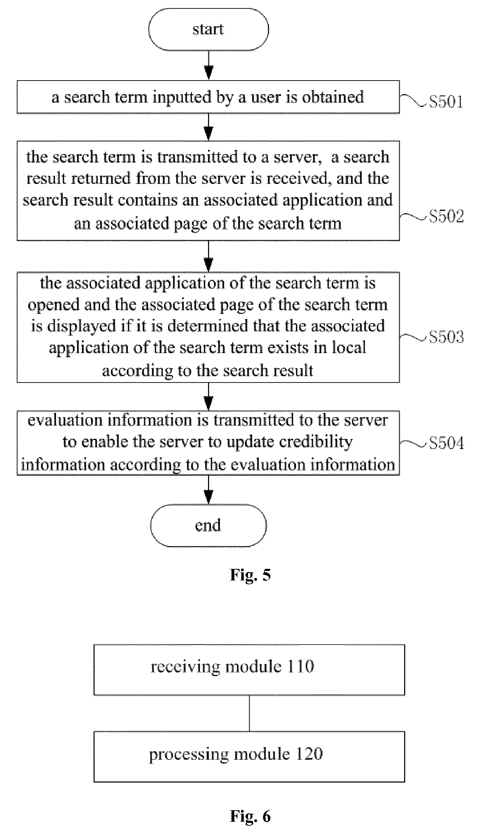

Fig. 5 is a flow chart of a method for searching for application information according to another specific embodiment of the present disclosure. This embodiment refers to a client-side. As shown in Fig. 5, the method for searching for application information includes following steps.

In step S501, a search term inputted by a user is obtained.

In an embodiment of the present disclosure, a client may obtain the search term inputted by the user. The search term may be a keyword of a resource desired by the user, for instance, the user may input "Samsung S5" for searching, if the user intends to obtain associated information (such as a time to market and a price, etc.) of Samsung S5.

In step S502, the search term is transmitted to a server, and a search result returned from the server is received. The search result contains an associated application and an associated page of the search term.

In an embodiment of the present disclosure, after obtaining the search term inputted by the user, the client may transmit the search term to the server to enable the server to perform a search according to the search term. After the server obtains the search result, the client may receive the search result returned from the server. The search result may contain an associated application and an associated page of the search term.

In step S503, the associated application of the search term is opened and the associated page of the search term is displayed, if it is determined that the associated application of the search term exists in local according to the search result.

In an embodiment of the present disclosure, the client may determine whether the associated application exists in local according to the search result. If there is the associated application, the associated application is opened and the associated page is displayed. For instance, if the search term of the user is "Samsung S5", the search result may include a Jingdong Mall APP. If the Jingdong Mall APP exists in the client, it may be opened and the information page associated with "Samsung S5" may be displayed. If there is no associated application in local, the client may download the associated application to local and then installs it. After installing the associated application, the client may open the associated application and display the associated page.

In step S504, evaluation information is transmitted to the server to enable the server to update credibility information according to the evaluation information.

In an embodiment of the present disclosure, the client may receive the evaluation information from the user, and transmits the evaluation information to the server, to enable the server to update credibility information according to the evaluation information. If the user's evaluation for the associated page displayed is satisfaction, the credibility of the application is increased; if the user's evaluation for the associated page displayed is dissatisfaction, the credibility of the application is reduced.

With the method according to the embodiments of the present disclosure, by transmitting the evaluation information to the server to enable the server to update credibility information according to the evaluation information, the applications may be ranked intelligently, so as to enable the user to obtain the application with a higher credibility more conveniently, thus saving the search time for the user, and promoting the user experience.

In order to implement the embodiments above, the present disclosure further provides an apparatus for searching for application information. As shown in Fig. 6, the apparatus for searching for application information includes: a receiving module 110 and a processing module 120.

Specifically, the receiving module 110 is configured to receive a search term sent from a client. The search term is inputted by the user in the client.

The processing module 120 is configured to obtain an associated application and an associated page of the search term received by the receiving module 110, to return a search result containing the associated application and the associated page of the search term to the client to enable the client to open the associated application of the search term and display the associated page of the search term if the client determines that the associated application of the search term exists in local.

In an embodiment of the present disclosure, after the receiving module 110 receives the search term sent from the client, the processing module 120 obtains the associated application and the associated page of the search term, and then returns the associated application and the associated page to the client so as to enable the client to open the associated application and display the associated page if it is determined that the associated application exists in local. For instance, if the search term of the user is "Samsung S5", the server may search according to "Samsung S5", and may obtain the associated applications (APP) containing "Samsung S5" and the associated pages of "Samsung S5". The associated applications (APP) containing "Samsung S5" include a news type APP (such as Sina news, Netease news, etc.), and may also include an online shopping type APP (such as Jingdong Mall, Amazon, etc.). If the Sina news APP exists in the client, it may be opened and the news page associated with "Samsung S5" may be displayed. If the Jingdong Mall APP exists in the client, it may be opened and the information page associated with "Samsung S5" may be displayed.

With the apparatus for searching for application information according to embodiments of the present disclosure, the associated application and the associated page of the search term are obtained, such that the user may obtain the desired application and the associated information thereof quickly and conveniently, and the associated page may be displayed when the associated application is opened by the client, thus saving the search time for the user, and promoting the user experience.

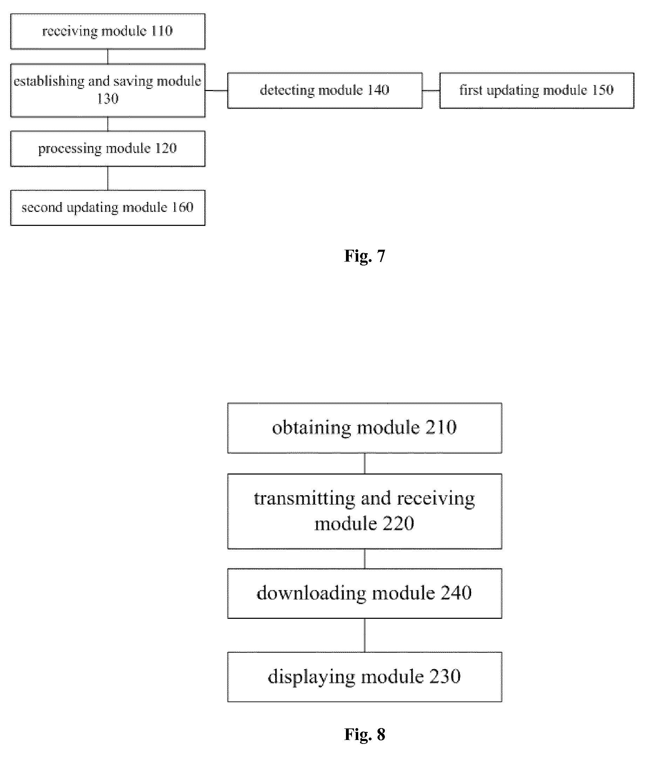

Fig. 7 is a structural diagram of an apparatus for searching for application information according to a specific embodiment of the present disclosure. As shown in Fig. 7, the apparatus for searching for application information includes: a receiving module 110, a processing module 120, an establishing and saving module 130, a detecting module 140, a first updating module 150 and a second updating module 160.

Specifically, the establishing and saving module 130 is configured to receive submitted information before the processing module 120 obtains the associated application and the associated page of the search term, and to obtain an associated application of the submitted information, to establish and save an information list containing the submitted information and the associated application thereof.

Specifically, the establishing and saving module 130 is configured to obtain frequency information, and to receive the information submitted by a developer via an interface provided by a third party according to the frequency information. The frequency information refers to a frequency of submitting the information by the developer in a certain period. The information submitted by the developer may include a keyword and page information, etc.

The detecting module 140 is configured to detect whether the keyword is associated with the page information, after the establishing and saving module 130 receives the submitted information and before the establishing and saving module 130 obtains the associated application of the submitted information.

If the detecting module 140 determines that the keyword is associated with the page information, the establishing and saving module 130 may obtain degrees of association of the keyword to applications based on a predetermined strategy, and obtain the associated application of the submitted information according to the degrees of association. The predetermined strategy may include but is not limited to one or more of a search hotspot investigation strategy, a keyword proportion precaution strategy and a credibility strategy. After obtaining the associated applications of the submitted information, the establishing and saving module 130 may establish and save the information list containing the submitted information and the associated application thereof.

The first updating module 150 is configured to update credibility information according to a detection result, after the detecting module 130 detects whether the keyword is associated with the page information.

In an embodiment of the present disclosure, after detecting whether the keyword is associated with the page information, the first updating module 150 may update credibility information according to a detection result. The credibility information may be used as a basis of ranking applications. A high credibility suggests a higher-ranking applicaion, and a low credibility suggests a lower-ranking applicaion. If all of the keywords and page information submitted by a developer are respectively associated, then the developer has a high credibility. If the keywords and page information submitted by a developer are not associated, then the developer has a low credibility. The information submitted by the developer with a high credibility may be detected by sampling, while the information submitted by the developer with a low credibility may be detected entirely, that is, a detecting strength for the information submitted by the developer with a low credibility is larger than that for the information submitted by the developer with a high credibility.

The second updating module 160 is configured to receive evaluation information returned from the client after the associated page is displayed, and to update credibility information according to the evaluation information, after the processing module returns a search result containing the associated application and the associated page to the client.

In an embodiment of the present disclosure, the second updating module 160 may receive the evaluation information returned from the client after the associated page is displayed, and may update the credibility information according to the evaluation information. If the user's evaluation for the associated page displayed is satisfaction, the credibility of the application is increased; if the user's evaluation for the associated page displayed is dissatisfaction, the credibility of the application is reduced.

With the apparatus according to the embodiments of the present disclosure, by updating the credibility information according to the evaluation information returned from the client, the applications may be ranked intelligently, so as to enable the user to obtain the application with a higher credibility more conveniently, thus saving the search time for the user, and promoting the user experience.

Fig. 8 is a block diagram of an apparatus for searching for application information according to another embodiment of the present disclosure. As shown in Fig. 8, the apparatus for searching for application information includes: an obtaining module 210, a transmitting and receiving module 220, a displaying module 230 and a downloading module 240.

Specifically, the obtaining module 210 is configured to obtain a search term inputted by a user.

In an embodiment of the present disclosure, the obtaining module 210 may obtain the search term inputted by the user. The search term may be a keyword of a resource desired by the user, for instance, the user may input "Samsung S5" for searching, if the user intends to obtain associated information (such as a time to market and a price, etc.) of Samsung S5.

The transmitting and receiving module 220 is configured to transmit the search term to a server, and receive a search result returned from the server.

In an embodiment of the present disclosure, after the obtaining module 210 obtains the search term inputted by the user, the transmitting and receiving module 220 may transmit the search term to the server to enable the server to perform a search according to the keyword. After the server obtains the search result, the transmitting and receiving module 220 may receive the search result returned from the server. The search result may contain an associated application and an associated page of the search term.

In an embodiment of the present disclosure, the transmitting and receiving module 220 is further configured to: transmit evaluation information to the server to enable the server to update credibility information according to the evaluation information, after the displaying module 230 displays the associated page.

In an embodiment of the present disclosure, the transmitting and receiving module 220 may receive the evaluation information from the client, and transmit the evaluation information to the server to enable the server to update the credibility information according to the evaluation information. If the user's evaluation for the associated page displayed is satisfaction, the credibility of the application is increased; if the user's evaluation for the associated page displayed is dissatisfaction, the credibility of the application is reduced.

The displaying module 230 is configured to open the associated application and display the associated page, if it is determined that the associated application exists in local according to the search result.

In an embodiment of the present disclosure, the displaying module 230 may determine whether the associated application exists in local according to the search result. If there is the associated application, the displaying module 230 may open the associated application and display the associated page. For instance, if the search term of the user is "Samsung S5", the search result may include a Jingdong Mall APP, etc. If the Jingdong Mall APP exists in the client, it may be opened and the information page associated with "Samsung S5" may be displayed.

The downloading module 240 is configured to download the associated application if it is determined that the associated application does not exist in local according to the search result.

Specifically, if there is no associated application in local, the downloading module 240 may download the associated application to local and then installs it. After installing the associated application, the displaying module 230 may open the associated application and display the associated page.

With the apparatus for searching for application information according to embodiments of the present disclosure, by obtaining the associated application and the associated page of the search term and displaying the associated page when the associated application is opened, the user may obtain the desired application and the associated information thereof quickly and conveniently, thus saving the search time for the user, and promoting the user experience.

In order to implement the embodiments above, a storage medium is provided by the present disclosure. The storage medium is configured to storage an application program for executing the method for searching for application information according to the embodiments corresponding to Figs.1-3.

In order to implement the embodiments above, a storage medium is provided by the present disclosure. The storage medium is configured to storage an application program for executing the method for searching for application information according to the embodiments corresponding to Fig. 4 and Fig. 5.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, in which the function may be executed not in the order shown or discussed herein, but may be executed essentially simultaneously or in contrary order, which should be understood by those skilled in the art.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or optical disks, etc.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A method for searching for application information, comprising:
receiving a search term sent from a client;
obtaining an associated application and an associated page of the search term, and returning a search result containing the associated application and the associated page of the search term to the client so as to enable the client to open the associated application of the search term and display the associated page of the search term if the client determines that the associated application of the search term exists in local.

2. The method of claim 1, before obtaining an associated application and an associated page of the search term, further comprising:
receiving submitted information, wherein the submitted information comprises a keyword and page information; and
obtaining an associated application of the submitted information, establishing and saving an information list containing the submitted information and the associated application of the submitted information.

3. The method of claim 2, after receiving submitted information, and before obtaining an associated application of the submitted information, further comprising:
detecting whether the keyword is associated with the page information.

4. The method of claim 3, wherein obtaining an associated application of the submitted information, comprises:
obtaining degrees of association of the keyword to applications based on a predetermined strategy, and obtaining the associated application of the submitted information according to the degrees of association, if it is determined that the keyword is associated with the page information; wherein the predetermined strategy comprises one or more of a search hotspot investigation strategy, a keyword proportion precaution strategy and a credibility strategy.

5. The method of claim 3 or 4, after detecting whether the keyword is associated with the page information, further comprising:
updating credibility information according to a detection result.

6. The method of claim 2, wherein receiving submitted information, comprises:
obtaining frequency information, and receiving the submitted information via an interface according to the frequency information.

7. The method of claim 1, after returning a search result containing the associated application and the associated page of the search term to the client, further comprising:
receiving evaluation information returned from the client after the associated page of the search term is displayed, and updating credibility information according to the evaluation information.

8. A method for searching for application information, comprising:
obtaining a search term inputted by a user;
transmitting the search term to a server, and receiving a search result returned from the server, wherein the search result contains an associated application and an associated page of the search term; and
opening the associated application of the search term and displaying the associated page of the search term, if it is determined that the associated application of the search term exists in local according to the search result.

9. The method of claim 8, further comprising:
downloading the associated application of the search term if it is determined that the associated application of the search term does not exist in local according to the search result.

10. The method of claim 8, after displaying the associated page of the search term, further comprising:
transmitting evaluation information to the server so as to enable the server to update credibility information according to the evaluation information.

11. An apparatus for searching for application information, comprising:
a receiving module, configured to receive a search term sent from a client;
a processing module, configured to obtain an associated application and an associated page of the search term received by the receiving module, to return a search result containing the associated application and the associated page of the search term to the client so as to enable the client to open the associated application of the search term and display the associated page of the search term if the client determines that the associated application of the search term exists in local.

12. The apparatus of claim 11, further comprising:
an establishing and saving module, configured to receive submitted information before the processing module obtains the associated application and the associated page of the search term, wherein the submitted information comprises a keyword and page information; and to obtain an associated application of the submitted information, to establish and save an information list containing the submitted information and the associated application of the submitted information.

13. The apparatus of claim 12, further comprising:
a detecting module, configured to detect whether the keyword is associated with the page information, after the establishing and saving module receives the submitted information and before the establishing and saving module obtains the associated application of the submitted information.

14. The apparatus of claim 13, wherein the processing module is further configured:
to obtain degrees of association of the keyword to applications based on a predetermined strategy, and to obtain the associated application of the submitted information according to the degrees of association, if the detecting module determines that the keyword is associated with the page information; wherein the predetermined strategy comprises one or more of a search hotspot investigation strategy, a keyword proportion precaution strategy and a credibility strategy.

15. The apparatus of claim 13 or 14, further comprising:
a first updating module, configured to update credibility information according to a detection result after the detecting module detects whether the keyword is associated with the page information.

16. The apparatus of claim 12, the receiving module is further configured:
to obtain frequency information, and to receive the submitted information via an interface according to the frequency information.

17. The apparatus of claim 11, further comprising:
a second updating module, configured to receive evaluation information returned from the client after the associated page of the search term is displayed, and to update credibility information according to the evaluation information, after the processing module returns a search result containing the associated application and the associated page of the search term to the client.

18. An apparatus for searching for application information, comprising:
an obtaining module, configured to obtain a search term inputted by a user;
a transmitting and receiving module, configured to transmit the search term to a server, and to receive a search result returned from the server, wherein the search result contains an associated application and an associated page of the search term; and
a displaying module, configured to open the associated application of the search term and display the associated page of the search term, if it is determined that the associated application of the search term exists in local according to the search result.

19. The apparatus of claim 18, further comprising:
a downloading module, configured to download the associated application of the search term if it is determined that the associated application of the search term does not exist in local according to the search result.

20. The apparatus of claim 18, wherein the transmitting and receiving module is further configured to:
transmit evaluation information to the server so as to enable the server to update credibility information according to the evaluation information, after the displaying module displays the associated page of the search term.

21. A storage medium, configured to storage an application program for executing a method for searching for application information according to any one of claims 1-7.

22. A storage medium, configured to storage an application program for executing a method for searching for application information according to any one of claims 8-10.
